# EUROPEAN PATENT SPECIFICATION

(11) **EP 2 793 735 B1**
(45) Date of publication and mention of the grant of the patent: **20.02.2019**
(21) Application number: 12860641.5
(22) Date of filing: 20.12.2012
(51) Int. Cl.: A61C 8/00

(54) **NUT FOR A DENTAL IMPLANT**
GEWINDEMUTTER FÜR EIN ZAHNIMPLANTAT
ÉCROU POUR UN IMPLANT DENTAIRE

(30) Priority: 21.12.2011 SE 1151238
(43) Date of publication of application: 29.10.2014
(73) Proprietor: Svea Tandvård Ab, 732 46 Arboga (SE)
(72) Inventor: DE BASSO, Ankido, 732 46 Arboga (SE)
(74) Representative: AWA Sweden AB
(86) International application number: PCT/SE2012/051455
(87) International publication number: WO 2013/095285

(56) References cited:
- WO-A1-2011/152801
- CN-A- 101 234 038
- DE-A1- 19 741 395
- JP-A- 2006 149 460
- US-A- 5 470 230
- US-A1- 2004 191 726
- US-A1- 2010 094 297
- US-A1- 2011 039 232
- US-A1- 2011 244 428
- US-B2- 7 776 099

## Description

### Technical Field of the Invention

The present invention relates to a nut for stabilizing a dental implant upon implantation in e.g. the maxilla of a patient.

### Background Art

The use of dental implants in the posterior regions of the upper jaw (maxilla) may be restricted due to lack of vertical bone structures. Generally, about 10 mm of vertical bone is regarded as a prerequisite for successful implantation, but studies have also shown that a successful result may be achieved in persons with less bone quantities. The normal jaw anatomy of the patient may give rise to small amounts of vertical bone and there is also a large genetic variation with respect to the size and anatomy of the sinus cavity and the size and anatomy of the upper jaw. Further, the size of the sinus may increase with age. Thus, a large sinus in combination with an unfavourable anatomy of the upper jaw or a thin upper jaw may give rise to small quantities of bone structures for fixating a dental implant.

Another factor that may reduce the chance of a successful outcome during dental implantation is the bone density or bone quality, which often may be poor in the back regions of the maxilla. This may also cause insufficient fixation of a dental implant. Decreased bone quality may be due to different diseases as well as infections and peridontitis. In patients with severe peridontitis, there might not be enough bone for a dental implant.

To achieve successful dental implantation, different techniques exist for increasing the amount of vertical bone structures available for receiving a dental implant. Similar solutions are found in for example CN101234038A and US 2004/191726A. In CN101234038A a device for lifting the maxillary sinus floor when the bone mass in the maxilla is insufficient is disclosed. US 2004/191726A relates to a sinus bolt detention system which includes a guide for precisely aligning a sinus support and an implant post for attachment through a bone. As a other example, a sinus augmentation or amplification may be performed about 6-9 months prior to mounting of the actual dental implant. Different techniques exist for performing the sinus augmentation, in which bone replacement material is added into the sinus in order to create a denser or thicker bone structure for the dental implant. Different bone replacements materials may be utilized during a sinus augmentation, such as bone from another part of the same patient (such as from another part of the patients maxilla or mandible, from the hip bone or from the tibia), freeze-dried bone, demineralised freeze-dried bone or synthetically produced bone replacements such as hydroxylapatite.

However, all sinus augmentation operations usually comprise a surgical operation in which the bone replacement is added via a cut in the gingival of the patient. Thus, if the person requires a sinus augmentation before mounting the dental implant, two surgical operations are usually needed.

Further, the dental implant should preferably not be exposed to stress during the first six months, i.e. during the period in which the bone replacement integrates with the patient's own bone structures. If the implant is exposed to stress or micro movements, there is a risk of in growth of connective tissue instead of bone, which destabilizes the dental implant. If a dental implant is mounted at the same time as performing the sinus augmentation, the risk of subjecting the implant to micro movements increase, i.e. the risk of ending up with an implant with poor anchoring to the bone increases.

To summarize, there is a need in the art for improved procedures for dental implantation in which less time is required for stabilizing the dental implant.

### Summary of the Invention

It is an object/aim of the present invention to provide a concept for dental implantation that provides for a stable implant after a short period of time.

This aim is achieved with a nut for a dental implant as defined in claim 1. Further advantageous embodiments are defined in the appended dependent claims.

As a first aspect of the invention, there is provided a nut for a dental implant, the nut adapted to be positioned under the sinus membrane of a maxillary sinus of a patient and comprising
- a hollow body having a first end, a second end and a through passage extending from the first end to the second end, wherein
- the second end abuts against the maxilla when the nut is positioned under the sinus membrane in a maxillary sinus of a patient and the through passage is adapted for receiving a dental implant at the second end, and wherein
- the second end further comprises at least two pins, adapted to extend into the maxilla when the nut is implanted under the sinus membrane in a maxillary sinus of a patient.

In the context of the present disclosure, a "nut" refers to a nut for receiving a dental implant, e.g. adapted to mate with the part of a dental implant that is screwed into the maxilla of a patient. However, the through passage of the nut of the present disclosure does not need to have a threaded surface. A "nut" refers to a nut adapted to mate with a large variety of dental implants, i.e. a nut that is not a part of a single system but may be used together with most dental implants. A dental implant refers to an implant that is implanted e.g. in the maxilla of a patient, such as screwed into the bone of the maxilla.

That the nut is "adapted to be positioned under the sinus membrane" means for example that the nut may have dimensions suitable for being positioned under the sinus membrane. The sinus membrane is sometimes also called the Schneiderian membrane.

A position under the sinus membrane may thus be between the sinus membrane and the maxilla, i.e. such that the second end of the nut abuts the maxilla on a side of the maxilla that do not face the oral cavity. In other words, when implanted, the nut according to the present invention may not be visible from the oral cavity.

A "through passage" refers to a passage or channel in the nut that is adapted to receive a dental implant that protrudes through the maxilla when the nut is mounted. The through passage may thus have dimension such that the screw of most dental implants fits within the through passage. For example, the trough passage may be circular with a diameter of about 2-6 mm, such as about 4 mm. The through passage thus forms the "cavity" of the hollow body.

The hollow body formed by the through passage thus provides for receiving a dental implant that extend throughout the whole nut and even extending out of the nut at the first end.

As an example, the nut may have a single through passage. Thus, the nut may be adapted for receiving a single dental implant.

The "pins" may be to elongated spikes extending from the hollow body at the second end. The pins of the present disclosure may be other than screws of dental implants. For example, the pins may be shorter than the conventional screws. The pins of the present invention provides for an antirotational stabilizing effect after inserting the dental implant under the sinus membrane. Consequently, the pins of the present disclosure may be adapted to extend into the maxilla from the second end of the nut in a direction towards the oral cavity after insertion of the nut under the sinus membrane. The second end comprising the pins may further have a planar surface except for the pins.

The first aspect of the invention is based on the insight that a universal nut adapted to be positioned under the sinus membrane of a maxillary sinus of a patient stabilizes a dental implant. When positioned, the at least two pins extend into the maxilla and prevents rotation of the nut, i.e. giving the dental implant-nut assembly a primary stabilizing effect. Thus, the nut may be for stabilizing a dental implant.

Further, the actual dental implant may be mounted at the same time as the nut is positioned under the sinus membrane, which means that the whole procedure may be performed in one-step instead of a first operation followed by a second operation 6-9 months after.

Further, the nut according to the present disclosure facilitates mounting of a dental implant in the upper jaw in is patients having a thin maxilla.

In embodiments of the first aspect, at least one pin has a notched surface. This means that the surface of at least one pin may have grooves, such as two grooves on each pin. The grooves or notches may extend along the same direction as the pin, such as rifts extending along the length of a pin. A pin may for example comprise two, three or four grooves. A notched surface further facilitates mounting of the nut such that the pins extend into the maxilla and further improves the healing process, i.e. facilitates osseointegration with the pins.

As an example, the pins extend from the hollow body at the second end in a direction substantially parallel with the direction of an imaginary line drawn from the first to the second end of the hollow body.

Consequently, the pins may extend into the maxilla in the direction towards the oral cavity when implanted. This may give an increased anti-rotation effect.

In embodiments of the first aspect, the length of the pins are between 0.5-2.5 mm, such as about 1.5 mm.

The inventor has found that the length of the pins between 0.5-2.5 mm, such as about 1.5 mm, facilitates insertion into the maxilla due to the morphology and dimensions of the microstructures of the maxilla. Pin lengths between 0.5-2.5 mm, such as about 1.5 mm, are suitable for fastening the nut in the maxilla facing the sinus cavity.

The inventor has found that, because of the structure of the bone, pins shorter than 0.5 mm may not extend into the maxilla, i.e. such pins provide no or little anti-rotation effect. Pins longer than 2.5 mm may extend into the oral cavity after insertion of the nut, and are therefore not preferred.

Further, the pins may have a thickness of about 0.2-0.6 mm, such as about 0.4 mm.

In embodiments of the first aspect, the through passage is adapted for tapping, wherein the tapping creates threads in the nut surface of the through passage and said threads are arranged to mate with threads of a screw of a dental implant.

Tapping is a process known to a skilled person and is the process of cutting threads using e.g. a tap, which is a well-known cutting tool for creating screw threads. The tapping of a nut thus creates internal threads in the nut.

Threads in the through passage arranged to mate with threads of a screw refers to threads that allows a screw to be fixed or tightened in the through passage.

That the through passage is adapted for tapping may refer to the nut surface in the through passage comprising a material that may be "tapped". For example, the nut surface may comprise titanium and/or zirconium, in which threads may be formed. Alternatively, or as a complement, the nut surface in the through passage may have a surface coating that facilitates the formation of threads in the through passage.

Screws of different dental implants may be threaded differently. A through passage adapted for tapping is advantageous since it allows the medical practitioner to create a specific thread type in the nut such that the nut may mate with a specific dental implant of interest. Different taps may be used, i.e. different types of threads may be created in the through passages of different nuts. However, a single nut may for example only have a single type of threads. Thus, the nut is therefore in its initial state adapted to mate with a variety of dental implants, but may later easily be "tapped" by a conventional tap to create specific threads that are needed for a dental implant of interest. For example, the medical practitioner may create the threads in the surface of the nut in the through passage just prior to insertion of the nut under the sinus membrane.

In embodiments of the first aspect, the through passage comprises threads on the nut surface in the through passage and said threads are arranged to mate with threads of a screw of a dental implant.

The nut of the present invention may thus comprise internal threads located in the through passage.

Consequently, the nut may be provided with a through passage that already has threads on the surface of the through passage.

According to the present invention, the through passage comprises resilient implant locking means for locking the position of a dental implant in the through passage.

This is advantageous since resilient locking means provides for locking the position of the dental implant within the nut, thus preventing the dental implant from sliding out of the nut. It further provides a stability that may prevent unfavourable micro movements of the nut or implant, which may cause in growth of connective tissue instead of bone, thereby destabilizing the dental implant.

A resilient locking means further provides for the use of different types of dental implants, i.e. the nut cannot only mate with a single type of dental implant with specific threads, but instead function as a "universal" nut, with the capacity to mate with a large variety of dental implants, regardless of the type of threads etc of the dental implant.

The resilient implant locking means may be adapted to be elastic in length of about 1 mm, such that the sprung state and the relaxed state of the resilient locking means differs in length of about 1 mm.

As an example, the resilient implant locking means comprises at least one row of resilient extensions on the wall of the through passage and extending from the first to the second end, wherein the resilient extensions are adapted to engage with threads of a dental implant such that motions of the dental implant in the through passage in the direction from the first end to the second end is prevented.

Thus, the resilient implant locking means may be provided as rows of resilient extensions such that they may deflect or bend upon insertion of the dental implant in the hollow passage in the second end, i.e. when the dental implant is pushed in the direction from the second end to the first end, but prevent the dental implant from moving in the direction from the first end to the second end. Thus, the resilient implant locking means may have a shape such that they are deflected upon insertion of the dental implant but not deflected upon movement of the implant from the first to the second end.

If the resilient implant locking means comprises more than one row, the rows may be spaced equally apart on the wall of the through passage. For example, the resilient implant locking means may comprise for rows spaced with equal distance from each other such that two rows faces each other in the through passage. The distance between the resilient extensions in one row may for example be about 0.1 - 1.5 mm, such as about 0.2-1.3 mm, such as about 0.5-1.2 mm, such as about 1 mm.

Further, each of the resilient implant locking means may have a triangular profile. The base of such a triangular profile may form an edge which engages with the threads of a dental implant such that the dental implant is locked in position. Thus, the resilient implant locking means may have a profile of a right angled triangle, with the base facing the first end of the nut.

In embodiments of the first aspect, the hollow body comprises a plurality of through holes extending from the outside of the hollow body to the through passage.

This is advantageous in that it promotes for the in growth of bone into the nut, which further stabilizes the structure. Further, bone may grow into the nut and reach the dental implant, thereby forming a bone-nut-dental implant complex, which increases the stabilizing effect even further. Thus, the through holes provides for a "secondary" stability achieved when the bone grow into the nut via the through holes. The through holes further provides for a nut structure of lower weight, which may be advantageous.

The through holes may for example be provided as a plurality of through holes that form rows on the hollow body.

As examples, the through holes may constitute about 5-60 % of the surface area of the hollow body, such as 10-50 % of the surface area of the hollow body, such as 25- 40 % of the surface area of the hollow body, such as about 30 % of the surface area of the hollow body.

As an example, the hollow body may have a "skeletal structure" with resilient locking means located on "bars" extending from the first end to the second end. In such a structure, the through holes may for example constitute about 50-60% of the surface area of the hollow body.

In embodiments of the first aspect, the second end is wider compared to the first end.

This thus gives the nut a wider "base" when positioned on the maxilla, which thus further enhances the stability.

As example, the second end may comprise an external flange such that the second end is wider compared to the first end.

The external flange may extend throughout the whole periphery of the second end.

Further, the flange further comprises a plurality of through holes.

This further provides for osseointegration of the nut with the bone of the maxilla. Thus, the through holes provides for a "secondary" stability achieved when the bone grow into the nut via the through holes. The through holes may have any suitable form, such as circular, rectangular or star shaped.

In embodiments of the first aspect, the hollow body has the shape of a hexagon when viewed from the first or second end.

This may further facilitate mounting of the nut under the sinus membrane, since tools may be used that easily mate with a hexagonal shape. As further examples, the hollow body may have a pentagonal shape or an octagonal shape.

The nut may further comprise a material that facilitates osseointegration. Consequently, in embodiments of the first aspect, the nut comprises a titanium and/or zirconium. For example, a major part of the nut may be made of titanium and/or zirconium.

Further, the surface of the nut may have a surface coating that further facilitates osseointegration.

As a second aspect which is not part of the present invention, there is provided a mounting tool for mounting a nut according to the first aspect under the sinus membrane in a maxillary sinus of a patient such that the second end of the nut abuts against the maxilla, wherein the tool comprises a mating part adapted to encompass and mate with the structure of the hollow body of the nut.

The inventor has come to the insight that a mounting tool that mates with the structure of the hollow body facilitates mounting of the nut under the sinus membrane. The mounting tool may for example mate with a hexagonal structure of the hollow body.

The mounting tool may for example comprise
an upper head part adapted to mate with a nut and adapted to be inserted under the sinus membrane and
a lower head part for abutting the maxilla when inserting the nut, the lower head part further having indication means for indicating the position of the nut, thereby indicating the position where a dental implant should be inserted in the maxilla in order for the dental implant to end up in the hollow body of the nut. Such indication means may for example be a through hole of the lower head part that is located straight under the mating part of the upper head part, i.e. such that an imaginary straight line may be drawn through the through hole and the through passage of a nut that has mated with the mating part of the upper head part.

The head parts may be arranged at an angle (rotated) compared to the direction of the handles to facilitate handling of the tool by a medical practitioner when inserting the nut, e.g. such that the medical practitioner may stand behind the patient at one side when inserting the nut. For example, the angle between the head parts and the handles may be 10-90°, such as 20-80°, such as 40-90°, such as 45-90°, such as 50-80°.

Consequently, in embodiments of the second aspect, the mounting tool comprises
an upper head part adapted to be inserted under the sinus membrane and comprising the mating part,
a lower head part adapted to be inserted in the oral cavity and abutting the maxilla, and
a pair of handles,
wherein the upper and lower head parts extend in a direction that is not parallel compared to the plane formed by the handles.

As an example, the angle between the direction of the head parts and the plane formed by the handles is about 40-90°.

As a further example, the lower head part comprises means for indicating a position for a dental implant upon insertion, the position being a position in the maxilla that is substantially straight under the nut under the sinus membrane.

As an example, the means for indicating a position is a through hole in the lower head part located such that an imaginary straight line may be drawn through the through hole and through the hollow body of the nut when the nut is fastened in the mating part of f the mounting tool.

### Brief description of the drawings

Figure 1a shows a front view of a universal nut according to the present disclosure.
Figure 1b shows the same nut as in Fig. 1a, but from a different perspective.
Figure 2a and 2b show two side views of the nut of Fig. 1a and Fig. 1b.
Figure 3a and Figure 3b show yet two other views of the nut as seen in Fig. 1 and Fig. 2.
Figure 4 shows different nuts according to the present disclosure having different shapes.
Figure 5 shows the nut of the present disclosure when mounted under the sinus membrane in a patient and having a dental implant fixated within the nut.
Figure 6 shows an example of resilient locking means according to the present disclosure.
Figure 7 shows a mounting tool for fixating a nut according to the present disclosure.
Figure 8 shows a top view of the mounting tool of Fig. 7.
Figure 9 shows a close up side view of the mounting tool of Fig. 7, in which a nut is positioned prior to fixation.
Figure 10a shows a universal nut having an interior surface that is adapted for tapping. Figure 10b shows the nut of Fig. 10a after tapping has been performed, i.e. after threads have been created in the surface of the through passage.

### Detailed description and Examples

The following non-limiting examples will further illustrate the present invention.

### 1. Example of a nut according to an embodiment of the present disclosure

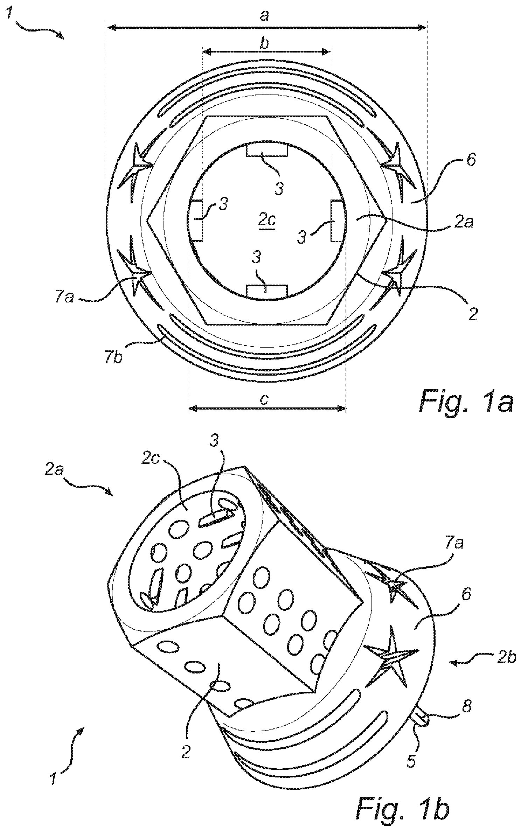

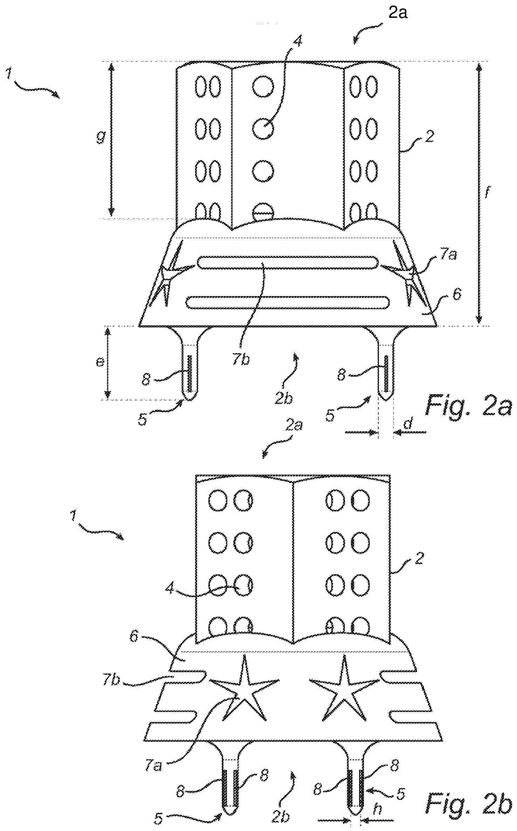

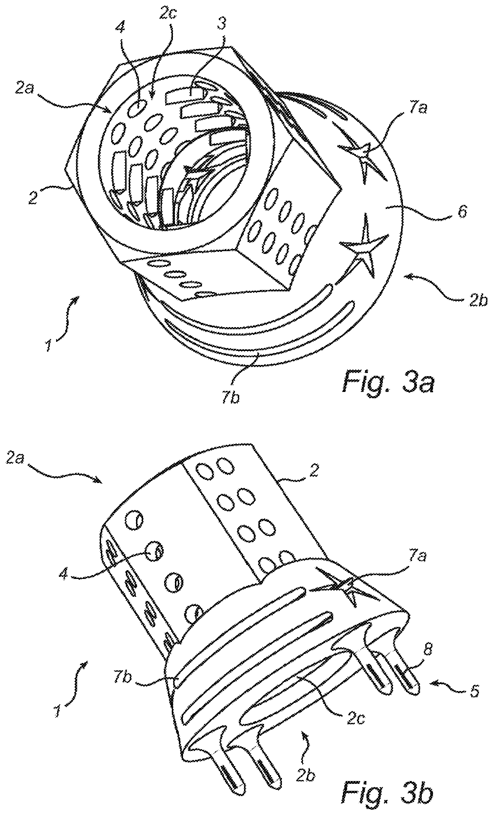

The following description of a nut is made with reference to Figs. 1-3, all showing the same nut but from different perspectives.

The universal nut 1 comprises a hollow body 2 having a hexagonal shape, a first end 2a, a second end 2b and through passage 2c. The hollow body is about 7 mm in length (distance "f"). The through passage is in the form of a circular tube with a diameter of about 4 mm (distance "c"). The through passage further comprises resilient locking means 3, in the form of four rows extending on the interior surface of the through passage 2c from the first end 2a to the second end 2b. The four rows are equally spaced around the inner circumference of the through passage 2c, such that the distance between two opposite rows (distance "b") is about 3.4 mm. The hollow body 2 further comprises a plurality of through passages 4 such that passages from the outside to the interior of the through passage 2c are formed. In this case, the through passages 4 are in the form of rows of circular holes on each side of the hexagonal structure. The universal nut 2 further comprises four pins 5 extending from the second end 2b in the same direction as the direction as from the first to second end. The pins all have a notched surface 8 and are about 2 mm in length (distance "e") and have a diameter of about 0.4 mm (distance "d"). Each of the pins have four notches, spaced about 0.3 mm apart (distance "h") on the surface of the pins 5. Due to a flange 6 that extends around the whole periphery of the second end 2b, the second end 2b is wider compared to the first end 2a. The flange is circular having a diameter of about 8 mm (distance "a"). The flange 6 also comprises through holes 7a and 7b, in this case star shaped (7a) and in elongated shapes (7b). The flange 6 extend about 3 mm from the second end 2b (such that distance "g" is 4 mm). The whole universal nut is made of titanium or zirconium or a combination thereof.

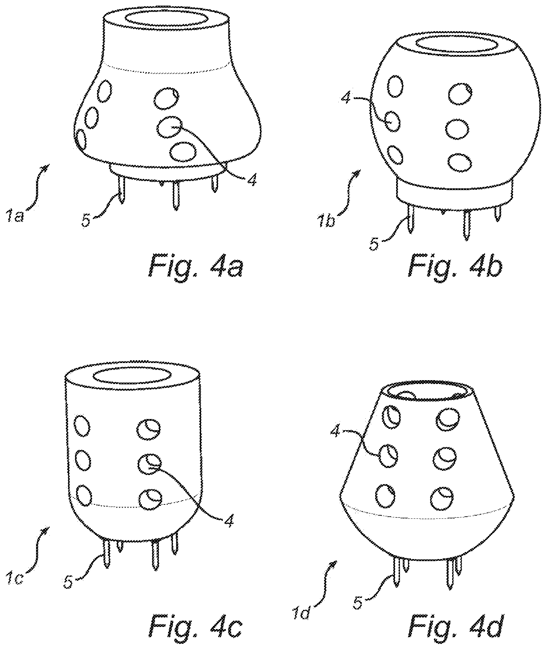

Figure 4a - 4d further shows different examples of a nut according to the present disclosure. In contrast to the nut shown in Figs 1-3, the hollow bodies of these nuts do not have a hexagonal shape, but instead have other suitable shapes that may be utilized.

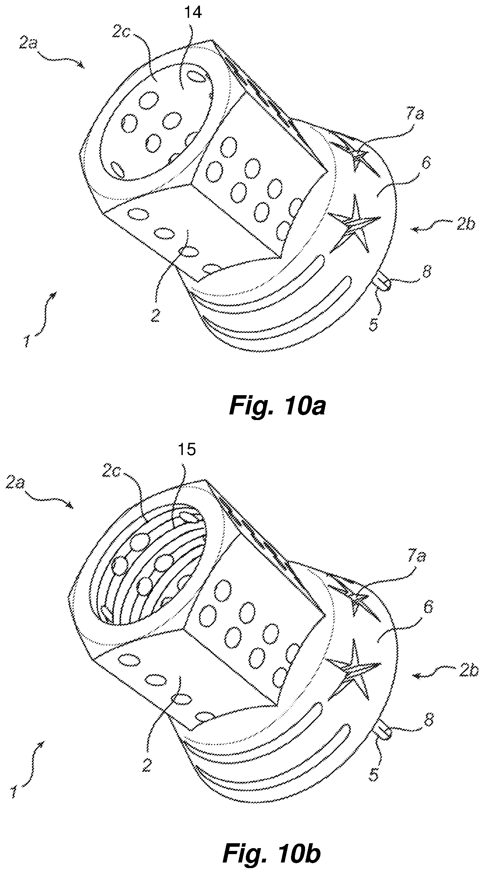

Figure 10a and 10b shows an embodiment of a nut according to the present disclosure. In Fig. 10a, the nut 1 has a through passage 2c that is adapted for tapping. The Tapping may be performed by conventional tapping equipment that fits the through passage 2c. The surface 14 of the nut 1 in the through passage may thus be smooth prior to tapping. The nut 1 may be of titanium, in which threads may be created by a tapping instrument. Alternatively, or as a compliment, the surface 14 may have a coating that facilitates the formation of threads. Such a coating may for example comprise a polymer or material that is softer than the material of the other parts of the nut. Figure 10b shows the same nut as in Fig. 10a, but after tapping has been performed. The tapping has thus created threads 15 in the nut surface 14 of the through passage 2c. These threads 15 are arranged to mate with the threads of a dental screw such that a screw may be fixed in the through passage 2c of the nut 1. It is to be understood that the medical practitioner may create the threads 15 in the nut 1 after having selected the type of dental implant. Thus, different tapping instruments may be used in order to created different types of threads, such as threads of different size, in the nut of Fig. 10a. Consequently, the nut of the of the present disclosure is "universal" and threads may be created in the through passage 2c such that a nut may mate with different types of dental screws. In other words, the medical practitioner may adapt the nut 1 to different screws on a case by case basis, i.e. depending on which type of dental screw is preferred in each case.

### 2. Example on the position of a nut according to the present disclosure

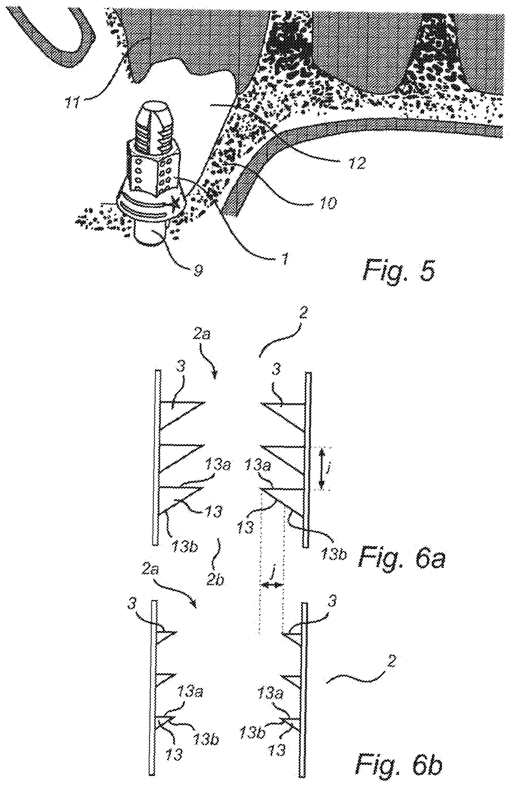

Figure 5 shows the position of a nut 1 under the sinus membrane 12 of the one of the front sinuses 11 of a patient. The nut 1 is positioned under the sinus membrane 12 with the spikes extending into the maxilla 10 of the patient, and the screw 9 of a dental implant that has been screwed into the maxilla from the oral cavity protrudes from the maxilla 11 and into the nut 1 via the through passage and extends on the other side. The nut 1 may be positioned by creating a lateral "window" with access to the front sinus 11. The sinus membrane 12 may then be gently lifted and the nut 1 placed such that the spikes extend into the maxilla 10. The dental implant 9 may be screwed into the maxilla 10 from the oral cavity such that it slightly protrudes the maxilla 10 on the other side, which facilitates positioning of the nut 1 at an optimal site. Autogenic or synthetic bone replacement may be added under the sinus membrane 12 before positioning the nut 1, followed by further bringing or screwing the dental implant through the nut 1 via the through passage of the nut e.g. such that it protrudes on the other side, as seen in Fig. 5. Since the nut 1 and dental implant 9 are connected directly after insertion of the dental implant in a patient, a primary stabilizing effect is combined together with an anti-rotation effect achieved with the spikes extending into the maxilla. Further, a bone replacement may be added to the through passage of the nut 1 before positioning the nut 1 under the sinus membrane 12 and hence before fastening the dental implant 9 in the nut 1. This would further increase the stability of the dental implant-nut construct and may further promote a stabilized secondary stage, in which a bone-dental implant-nut complex is formed.

### 3. Example of resilient locking means according to the present disclosure

An example of the shape of resilient locking means is seen in figs. 6a and 6b, which shows a section or cut of the hollow body 2. Resilient locking means 3 are seen on the surface of the hollow body 2, in this case in the form of rows of resilient extensions 13. Each resilient extension 13 has the profile of a right-angled triangle, with a base facing the wall of the hollow body, a base 13a facing the first end 2a and the hypotenuse 13 b facing the second end 2b of the hollow body 2. Two resilient extensions in a row are spaced with a distance (distance i) of 0.1 - 1.5 mm, such as about 0.2-1.3 mm, such as about 0.5-1.2 mm, such as about 1 mm. The resilient locking means are sprung such that the length of the base 13a that protrudes from the wall into the hollow body 2 in the relaxed state (in Fig. 6a) compared to the length of the same base 13a protruding when the resilient extensions 13 are in a "sprung" state (Fig. 6b) are about 1 mm, i.e. distance j may be about 1 mm. Fig. 6a thus shows the resilient locking means 13 in a relaxed state, i.e. when no dental implant has been inserted, whereas Fig. 6b shows the same resilient locking means during insertion of a dental implant from the second end 2b to the first end 2a. The resilient locking means 3 are adapted to be pushed into the wall of the hollow body 2 upon insertion, and then "spring back" such that the sharp edge formed by the base 13a and the hypotenuse 13b resides in the grooves of the threads of a dental implant, thus preventing motions of a dental implant in the direction from the first end 2a to the second end 2b. Thus, the resilient extensions 13 are adapted to engage with the threads of a dental implant.

### 4. Example of a mounting tool according to the present disclosure

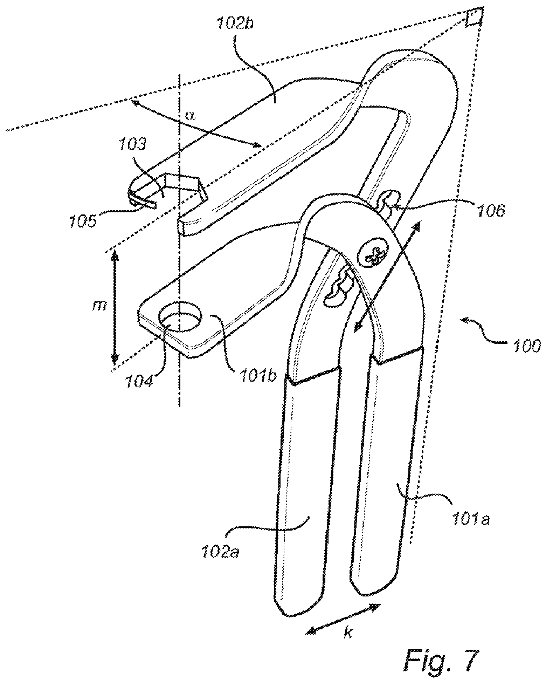

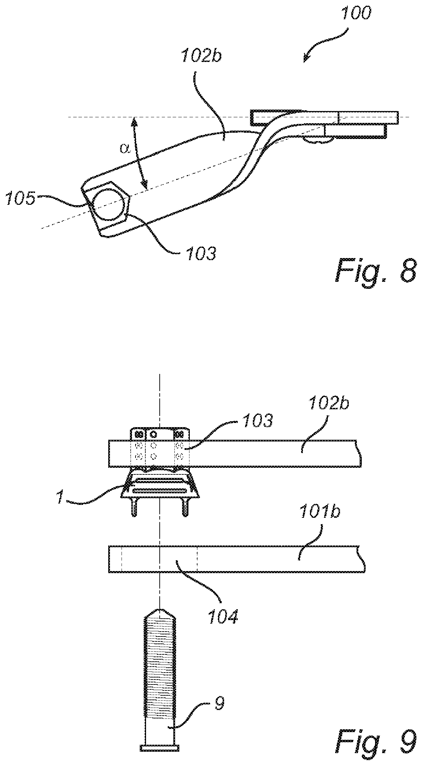

Figure 7 shows a schematic example of a mounting tool 100 according to the present disclosure for mounting a nut under the sinus membrane of a patient. The mounting tool 100 comprises two handles 101a and 102a, each having a head part 101b and 102b, respectively. The head parts 101b and 102b are rotated or arranged at an angle α compared to the direction of the handles 101a and 102a, as further seen in Fig. 8. In the figure, the rotation is about 30-45°, but is to be understood that α may be anywhere between 0 and 90°. In embodiments it may be advantageous to have a rotation of about 45-90°, such as about 50-75 °. In certain embodiments, the mounting tool is arranged such that α may be adjusted manually between certain angles, such as between 0-90°. Thus, the head parts may be rotatable around the handles. The upper head part 102b has a nut mating part 103 adapted to mate with a nut according to the present disclosure. The part 103 is adapted to encompass the hollow body of the nut. In this case, the mating part 103 is adapted to encompass a nut having a hexagonal body. The nut may be held in position in the mating part 103 by spring means 105. The lower head part 101b has a through hole 104 located straight under the mating part 103 of the upper head part 102b, such that a dental implant inserted through the through hole 104 of the lower head part 101b mates with a nut held by the mating part 103 of the upper head part 102b. The distance m between the upper and lower head parts 101b, 102b may be adjusted with adjusting means 106 and the upper and lower head part 101b, 102b may be pressed together by pressing the handles 101a, 102a together such that distance k decreases. By pressing the handles together, the distance m thus decreases.

Figure 8 shows a top view of the mounting tool 100 of Fig. 7. Fig. 8 shows that the head parts 102b and 101 b (not seen in figure) are rotated compared to the direction of the handle 101a and 102a with angle α. This facilitates mounting of the nut, i.e. it facilitates insertion of the mounting tool 100 from outside the mouth to the oral cavity, such that a medical practitioner may e.g. stand behind the patient at one side and insert the head parts 101b and 102b, holding a nut, into the mouth of a patient.

Figure 9 shows a close up of the upper and lower head parts 102b, 101b when a nut 1 is positioned in the mating part 103 of the upper head part 102b. When inserting the nut 1 under the sinus membrane of a patient, the upper head part 102b with the nut 1 is inserted to a location under the sinus membrane of the sinus from the oral cavity through a cut in the gingival of the patient, whereas the lower head part 101b is fixated against the maxilla at the place where the dental implant 9 is to be inserted. By pressing the handles together, the nut 1 may be fastened under the sinus membrane and due to the through hole 104, the medical practitioner knows where to insert the dental implant 9 such that the screws of the dental implant 9 mates with the hollow body of the nut 1. Thus, by screwing the dental implant through the through hole 104, the dental implant 9 is inserted in the right position, i.e. where the nut 1 is located. Thus, an imaginary straight line may be drawn through the through hole 104 and further continue through the hollow body of the nut 1.

Consequently, the mounting of the present invention facilitates mounting a nut under the sinus membrane and further facilitates subsequent insertion of a dental implant at the right position, i.e. such that it mates with the nut.

## Claims

1. A nut (1) for a dental implant, said nut (1) adapted to be positioned under the sinus membrane (12) of a maxillary sinus of a patient and comprising
- a hollow body (2) having a first end (2a), a second end (2b) and a through passage (2c) extending from the first end (2a) to the second end (2b), wherein
- the second end (2b) abuts against the maxilla (10) when the nut (1) is positioned under the sinus membrane (12) in a maxillary sinus of a patient and the through passage (2c) is adapted for receiving a dental implant at said second end (2b), and wherein
- said second end (2b) further comprises at least two pins (5), adapted to extend into the maxilla (10) when said nut (1) is implanted under the sinus membrane (12) in a maxillary sinus of a patient; said nut (1) **characterized in that**
- said through passage (2c) comprises resilient implant locking means (3) for locking the position of a dental implant in said through passage (2c), wherein
- the resilient implant locking means (3) comprises at least one row of resilient extensions (13) on the wall of said through passage (2c) and extending from the first to the second end (2b), wherein the resilient extensions (13) are adapted to engage with threads (15) of a dental implant such that motions of the dental implant in the through passage (2c) in the direction from the first end (2a) to the second end (2b) is prevented.

2. A nut (1) according to claim 1, wherein at least one pin (5) has a notched surface (8).

3. A nut (1) according to claim 1 or 2, wherein the pins (5) extend from the hollow body (2) at said second end (2b) in a direction substantially parallel with the direction of an imaginary line drawn from the first to the second end (2b) of the hollow body.

4. A nut (1) according to any one of claims 1-3, wherein the length of said pins (5) are between 0.5-2.5 mm, such as about 1.5 mm.

5. A nut (1) according to any previous claim, wherein the through passage (2c) is adapted for tapping, wherein said tapping creates threads (15) in the nut (1) surface of the through passage (2c) and said threads (15) are arranged to mate with threads of a screw of a dental implant.

6. A nut (1) according to any one of claims 1-4, wherein the through passage (2c) comprises threads (15) on the nut (1) surface in the through passage (2c) and said threads (15) are arranged to mate with threads (15) of a screw of a dental implant.

7. A nut (1) according to any previous claim, wherein the hollow body (2) comprises a plurality of through holes extending from the outside of the hollow body (2) to the through passage (2c).

8. A nut (1) according to any previous claim, wherein said second end (2b) is wider compared to the first end (2a).

## Patentansprüche

1. Mutter (1) für ein Zahnimplantat, wobei die Mutter (1) zur Platzierung unter der Sinusmembran (12) einer Kieferhöhle eines Patienten ausgelegt ist und Folgendes umfasst:
- einen hohlen Körper (2) mit einem ersten Ende (2a), einem zweiten Ende (2b) und einem Durchgang (2c), der sich vom ersten Ende (2a) zum zweiten Ende (2b) erstreckt, wobei
- das zweite Ende (2b) an den Oberkiefer (10) anstößt, wenn die Mutter (1) unter der Sinusmembran (12) in einer Kieferhöhle eines Patienten angeordnet ist und der Durchgang (2c) zur Aufnahme eines Zahnimplantats am zweiten Ende (2b) ausgelegt ist, und wobei
- das zweite Ende (2b) ferner mindestens zwei Stifte (5) umfasst, die dazu ausgelegt sind, sich in den Oberkiefer (10) zu erstrecken, wenn die Mutter (1) unter der Sinusmembran (12) in einer Kieferhöhlen eines Patienten implantiert ist; wobei die Mutter (1) **dadurch gekennzeichnet ist, dass**
- der Durchgang (2c) nachgiebige Implantatarretierungsmittel (3) zur Arretierung der Position eines Zahnimplantats in dem Durchgang (2c) umfasst, wobei
- das nachgiebige Implantatarretierungsmittel (3) mindestens eine Reihe nachgiebiger Verlängerungen (13) an der Wand des Durchgangs (2c) umfasst, die sich vom ersten zum zweiten Ende (2b) erstrecken, wobei die nachgiebigen Verlängerungen (13) dazu ausgelegt sind, mit Gewinden (15) eines Zahnimplantats in Eingriff zu kommen, so dass Bewegungen des Zahnimplantats im Durchgang (2c) in der Richtung vom ersten Ende (2a) zum zweiten Ende (2b) verhindert werden.

2. Mutter (1) nach Anspruch 1, wobei mindestens ein Stift (5) eine gekerbte Oberfläche (8) aufweist.

3. Mutter (1) nach Anspruch 1 oder 2, wobei sich die Stifte (5) vom hohlen Körper (2) am zweiten Ende (2b) in eine Richtung erstrecken, die im Wesentlichen parallel mit der Richtung einer vom ersten zum zweiten Ende (2b) des hohlen Körpers gezogenen imaginären Linie ist.

4. Mutter (1) nach einem der Ansprüche 1-3, wobei die Länge der Stifte (5) 0,5-2,5 mm, beispielsweise ungefähr 1,5 mm beträgt.

5. Mutter (1) nach einem der vorhergehenden Ansprüche, wobei der Durchgang (2c) zum Gewindeschneiden ausgelegt ist, wobei das Gewindeschneiden Gewinde (15) in der Oberfläche der Mutter (1) des Durchgangs (2c) erzeugt und die Gewinde (15) so angeordnet sind, dass sie mit Gewinden einer Schraube eines Zahnimplantats zusammenpassen.

6. Mutter (1) nach einem der Ansprüche 1-4, wobei der Durchgang (2c) Gewinde (15) auf der Oberfläche der Mutter (1) im Durchgang (2c) umfasst und die Gewinde (15) so angeordnet sind, dass sie mit Gewinden (15) einer Schraube eines Zahnimplantats zusammenpassen.

7. Mutter (1) nach einem der vorhergehenden Ansprüche, wobei der hohle Körper (2) eine Vielzahl von Durchgangslöchern umfasst, die sich von der Außenseite des hohlen Körpers (2) zum Durchgang (2c) erstrecken.

8. Mutter (1) nach einem der vorhergehenden Ansprüche, wobei das zweite Ende (2b) im Vergleich zum ersten Ende (2a) breiter ist.

## Revendications

1. Ecrou (1) pour un implant dentaire, ledit écrou (1) étant adapté pour être positionné en dessous de la membrane sinusale (12) d'un sinus maxillaire d'un patient et comprenant:
- un corps creux (2) présentant une première extrémité (2a), une seconde extrémité (2b) et un passage traversant (2c) qui s'étend à partir de la première extrémité (2a) jusqu'à la seconde extrémité (2b), dans lequel
- la seconde extrémité (2b) bute contre la maxillaire (10) lorsque l'écrou (1) est positionné en dessous de la membrane sinusale (12) dans un sinus maxillaire d'un patient, et le passage traversant (2c) est adapté pour recevoir un implant dentaire à ladite seconde extrémité (2b), et dans lequel
- ladite seconde extrémité (2b) comprend en outre au moins deux broches (5), adaptées pour s'étendre dans la maxillaire (10) lorsque ledit écrou (1) est implanté en dessous de la membrane sinusale (12) dans un sinus maxillaire d'un patient;
ledit écrou (1) étant **caractérisé en ce que**:
- ledit passage traversant (2c) comprend des moyens de verrouillage d'implant élastiques (3) pour verrouiller la position d'un implant dentaire dans ledit passage traversant (2c), dans lequel
- les moyens de verrouillage d'implant élastiques (3) comprennent au moins une rangée d'extensions élastiques (13) sur la paroi dudit passage traversant (2c) et qui s'étendent à partir de la première jusqu'à la seconde extrémité (2b), dans lequel les extensions élastiques (13) sont adaptées pour s'engager avec des filets (15) d'un implant dentaire de telle sorte que des mouvements de l'implant dentaire dans le passage traversant (2c) dans la direction à partir de la première extrémité (2a) jusqu'à la seconde extrémité (2b) soient empêchés.

2. Ecrou (1) selon la revendication 1, dans lequel au moins une broche (5) présente une surface encochée (8).

3. Ecrou (1) selon la revendication 1 ou 2, dans lequel les broches (5) s'étendent à partir du corps creux (2) à ladite seconde extrémité (2b) dans une direction sensiblement parallèle à la direction d'une ligne imaginaire tracée à partir de la première jusqu'à la seconde extrémité (2b) du corps creux.

4. Ecrou (1) selon l'une quelconque des revendications 1 à 3, dans lequel la longueur desdites broches (5) est comprise entre 0,5 mm et 2,5 mm, et est par exemple d'environ 1,5 mm.

5. Ecrou (1) selon l'une quelconque des revendications précédentes, dans lequel le passage traversant (2c) est adapté pour un taraudage, dans lequel ledit taraudage crée des filets (15) dans la surface du passage traversant (2c) de l'écrou (1) et lesdits filets (15) sont agencés de manière à se coupler avec des filets d'une vis d'un implant dentaire.

6. Ecrou (1) selon l'une quelconque des revendications 1 à 4, dans lequel le passage traversant (2c) comporte des filets (15) sur la surface de l'écrou (1) dans le passage traversant (2c) et lesdits filets (15) sont agencés de manière à se coupler avec des filets (15) d'une vis d'un implant dentaire.

7. Ecrou (1) selon l'une quelconque des revendications précédentes, dans lequel le corps creux (2) comprend une pluralité de trous traversants qui s'étendent à partir de l'extérieur du corps creux (2) jusqu'au passage traversant (2c).

8. Ecrou (1) selon l'une quelconque des revendications précédentes, dans lequel ladite seconde extrémité (2b) est plus large comparée à la première extrémité (2a).
